# FASCICULE DE BREVET EUROPEEN

(11) **EP 0 891 058 B1**
(45) Date de publication et mention de la délivrance du brevet: **13.09.2006**
(21) Numéro de dépôt: 98401738.4
(22) Date de dépôt: 09.07.1998
(51) Int. Cl.: H04L 12/56, H04Q 11/04

(54) **Commutateur à autonomie d'acheminement et système de vidéoconférence utilisant un tel commutateur**
Selbstleitweglenkender schalter und einen solchen schalten benutzendes videokonferenzsystem
Self-routing switch and videoconference system using such a switch

(30) Priorité: 10.07.1997 FR 9708814
(43) Date de publication de la demande: 13.01.1999
(73) Titulaire: BULL S.A., 78430 Louveciennes (FR)
(72) Inventeur: Lecourtier, Georges, 78000 Versailles (FR); Kaszynski, Anne, 78660 Ablis (FR)

(56) Documents cités:
- US-A- 5 261 066
- THILAKAM K ET AL: "PROPOSED HIGH SPEED PACKET SWITCH FOR BROADBAND INTEGRATED NETWORKS" COMPUTER COMMUNICATIONS, vol. 12, no. 6, 1 décembre 1989, pages 337-348, XP000083423
- TAKEO KOINUMA ET AL: "AN ATM SWITCHING SYSTEM BASED ON A DISTRIBUTED CONTROL ARCHITECTURE" INTERNATIONAL SWITCHING SYMPOSIUM, vol. 5, 28 mai 1990, pages 21-26, XP000130921 STOCHOLM, SWEDEN
- LICCIARDI L ET AL: "A MULTICHIP MODULE SOLUTION FOR HIGH PERFORMANCE ATM SWITCHING" PROC. IEEE MULTI-CHIP MODULE CONFERENCE, 6 - 7 février 1996, pages 10-15, XP000628430 SANTA CRUZ, CA, USA
- THOMANN M: "CUSTOM ASIC VLSI DEVICE FOR ASYNCHRONOUS TRANSFER MODE" IEEE INTERNATIONAL SOLID STATE CIRCUITS CONFERENCE, vol. 39, février 1996, page 114/115, 427 XP000685557

## Description

Le domaine de l'invention est celui de la téléinformatique et concerne plus particulièrement un commutateur à autonomie d'acheminement et un système de vidéoconférence utilisant un tel commutateur.

On connaît des systèmes de vidéoconférence qui mettent en liaison un nombre restreint de salles spécialisées dans lesquelles se regroupent des participants à une conférence. Chaque salle est équipée d'un système de télévision constitué d'au moins une caméra, d'un ou plusieurs écrans et de moyens d'émission et de réception pour permettre aux participants de chaque salle de communiquer avec les participants d'autres salles en regardant et en écoutant ce qui se passe dans les autres salles. Les communications se font au moyen de liaisons spécialisées à haut débit pour véhiculer des images synchronisées avec du son. Ces systèmes nécessitent un investissement coûteux dans des salles spécialisées. La mise en place d'une vidéoconférence nécessite de regrouper physiquement les participants par salles spécialisées.

Les développements prometteurs de la microinformatique permettent par ailleurs de faire communiquer deux interlocuteurs par l'échange de sons à fréquence vocale, synchronisés à leurs images réciproques. Chaque interlocuteur dispose alors d'un micro-ordinateur équipé d'une caméra et de moyens de perception et de stimulation sonore. En établissant une connexion entre les deux micro-ordinateurs, chaque interlocuteur peut visualiser sur son écran une image animée de son partenaire et discuter avec lui grâce aux moyens de perception et de stimulation sonore. Chaque micro-ordinateur constitue un équipement terminal de traitement de données, appelé plus simplement par la suite ETTD (DTE en anglais pour data terminal equipment). La connexion peut être établie au moyen de modem dont est alors équipé chaque ETTD. Si les deux interlocuteurs ne sont pas trop éloignés, on peut envisager d'établir la connexion au moyen d'un réseau local, par exemple avec méthode d'accès à test de porteuse et détection de collision ou CSMA/CD (Carrier Sense Multiple Access with Collision Detection en anglais).

Sans s'étendre sur la méthode CSMA/CD définie par la norme IEEE bien connue 802.3, il convient de remarquer qu'une telle méthode permet d'établir des connexions entre plus de deux ETTD. Un ETTD doit détecter une absence de signaux ou silence sur la ligne matérielle qui le relie aux autres ETTD, pour émettre une trame de données vers les autres ETTD. Les propriétés physiques de la ligne matérielle entre ETTD introduisent un décalage temporel entre l'émission d'une trame par un ETTD et la réception de cette trame par un autre ETTD. Ce décalage temporel augmente avec la distance séparant les ETTD. Pour éradiquer les collisions résultant de ce retard, un protocole de liaison prévoit d'interrompre une émission de trame après détection d'une collision puis de réémettre cette trame après un délai aléatoire. D'autre part, la longueur d'une trame est proportionnelle à la quantité de données transmises avec une longueur minimale pour détecter une collision. Il résulte des caractéristiques de la méthode CSMA/CD que les délais moyens de transmission restent courts sur les lignes physiques de faible longueur et à faible taux d'utilisation. Par exemple, une émission isolée dans le temps s'exécute sans aucune attente préalable. Si plusieurs ETTD émettent des trames en permanence, l'ordre effectif de transmission des trames sur la ligne matérielle ne respecte pas nécessairement l'ordre souhaité par les ETTD. Ceci peut poser des problèmes pour véhiculer sur la ligne physique une grande quantité de données, de et vers plusieurs ETTD, nécessitant une parfaite synchronisation de leur réception, problème exacerbé par un éloignement réciproque des ETTD.

La nécessité de véhiculer une grande quantité de données nécessitant une parfaite synchronisation de leur réception se retrouve dans différents domaines techniques à forte interractivité entre un nombre conséquent d'ETTD.

Dans le domaine de la vidéoconférence, pour que plusieurs participants puissent assister à une même conférence sans nécessiter de se déplacer, chaque participant doit pouvoir émettre au moins une image animée synchronisée avec du son vers les autres participants et recevoir au moins une image animée synchronisée avec du son des autres participants, ceci en temps réel ou en différé pour faire par exemple une synthèse de la conférence. L'image reçue est par exemple celle d'un autre participant, une image composite regroupant les images d'autres participants, une image en provenance d'une banque d'images ou toute combinaison des images animées synchronisées avec du son précédemment citées. Ces images sont émises et reçues au moyen de différents ETTD parmi lesquels se trouvent par exemple un serveur vidéo et un ou plusieurs routeurs communiquant des images avec un ou plusieurs participants connectés à un même réseau local. L'émission et la réception d'images animées synchronisées avec du son traduit alors une forte interactivité entre un nombre conséquent d'ETTD.

Dans le domaine des processus industriels rapides, plusieurs machines distantes peuvent avoir besoin d'exécuter, chacune en temps réel, une partie de processus ayant de fortes interactions matérielles avec d'autres parties du même processus, processus concernant par exemple le contrôle des flux de matière et ou d'énergie. La survenance d'un défaut dans le processus industriel est susceptible d'y provoquer une apparition de défauts en cascades pour lesquels il est intéressant de détecter un ordre absolu de survenance des défauts. Les asservissements entre parties de processus peuvent nécessiter des échanges de quantités importantes de paramètres parfaitement synchronisées. Chaque machine constitue alors un ETTD communiquant des données numériques avec d'autres ETTD.

La méthode CSMA/CD permet de connecter plusieurs ETTD mais elle n'est pas satisfaisante dès que les ETTD sont éloignés les uns des autres, car des réémissions après détection de collision sur de grandes distances, engendrent des asynchronismes sur les réceptions de trames émises.

Pour éviter les problèmes précédemment cités, il est préférable d'établir des liaisons de type point à point entre ETTD au moyen d'un ou plusieurs commutateurs à autonomie d'acheminement de sorte qu'il existe une et une seule connexion physique bidirectionnelle entre un ETTD considéré et un commutateur à autonomie d'acheminement. On évite ainsi les problèmes de collisions entre l'ETTD considéré et ledit commutateur. Ledit commutateur est prévu pour établir des liaisons avec les ETTD qui lui sont connectés et éventuellement avec un ou plusieurs autres commutateurs similaires sur lesquels sont connectés d'autres ETTD. En établissant des liaisons entre commutateurs, il est alors possible d'établir des liaisons entre ETTD connectés sur des commutateurs différents.

Le commutateur à autonomie d'acheminement doit être prévu pour établir des liaisons depuis un ETTD émetteur vers un ou plusieurs ETTD récepteurs et depuis plusieurs ETTD émetteurs vers un ETTD récepteur, voire plusieurs ETTD récepteurs. Par exemple dans une vidéoconférence, des liaisons depuis un ETTD émetteur vers un ou plusieurs ETTD récepteurs sont nécessaires pour émettre une image globale de la vidéoconférence depuis un serveur d'images, ETTD émetteur, vers chaque ETTD récepteur dont dispose un participant à la vidéoconférence. Des liaisons depuis plusieurs ETTD émetteurs vers un ETTD récepteur sont nécessaires pour émettre une image de chaque participant, disposant d'un ETTD émetteur, vers le serveur d'image, alors ETTD récepteur pour composer l'image globale de la vidéoconférence. Des liaisons depuis plusieurs ETTD émetteurs vers un ETTD récepteur peuvent être utiles pour émettre une image de chaque participant disposant d'un ETTD émetteur vers le serveur d'image et une banque d'images, alors ETTD récepteurs.

D'autre part, le commutateur à autonomie d'acheminement doit être prévu pour établir des liaisons supplémentaires à tout moment avec de nouveaux ETTD connectés. C'est par exemple le cas lorsqu'un nouveau participant arrive en cours de conférence.

Pour satisfaire les besoins ci-dessus exprimés et répondre aux problèmes évoqués, l'invention propose un commutateur à autonomie d'acheminement comprenant plusieurs ports émetteurs et plusieurs ports récepteurs, chaque port émetteur étant destiné à être connecté à un équipement terminal de traitement de données récepteur ou à un port récepteur d'un autre commutateur à autonomie d'acheminement, chaque port récepteur étant destiné à être connecté à un équipement terminal de traitement de données émetteur ou à un port émetteur d'un autre commutateur à autonomie d'acheminement, chaque port récepteur est affectée une pile de réception adressable dans un espace d'adressage logique unique et en ce qu'à chaque port émetteur est affectée une pile d'émission pour contenir des adresses dudit espace d'adressage logique unique
affectée à chaque port émetteur,
caractérisé en ce que
les ports émetteurs et les ports récepteurs du commutateur à autonomie d'acheminement sont regroupés dans un ou plusieurs circuits intégrés (38, 39, 40) à haute densité
comprenant chacun une mémoire à accès très rapide (44) physiquement accédée en lecture par les dits ports émetteurs et en écriture par les dits ports récepteurs regroupés dans le même circuit intégré,
connectés à une mémoire à accès rapide (42) dans ledit commutateur au moyen d'un bus local (43) de façon à pouvoir échanger des blocs de données entre mémoires à accès très rapide (44) et mémoire à accès rapide (42) au moyen d'un protocole antémémoire de premier niveau. Une variante intéressante de l'invention est un Commutateur à autonomie d'acheminement (31, 33)
comprenant plusieurs ports émetteurs (51, 53, 55, 57) et plusieurs ports récepteurs (50, 52, 54, 56),
chaque port émetteur étant destiné à être connecté à un équipement terminal de traitement de données (10, 28, 29) récepteur ou à un port récepteur d'un autre commutateur à autonomie d'acheminement (32, 34),
chaque port récepteur étant destiné à être connecté à un équipement terminal de traitement de données (10, 28, 29) émetteur ou à un port émetteur d'un autre commutateur à autonomie d'acheminement (32, 34),
une pile de réception (102) adressable dans un espace d'adressage logique unique affectée à chaque port récepteur,
une pile d'émission (109) pour contenir des blocs de données adressés dans ledit espace d'adressage logique affectée à chaque port émetteur,
caractérisé en ce que
les ports émetteurs et les ports récepteurs du commutateur à autonomie d'acheminement sont regroupés dans un ou plusieurs circuits intégrés (38, 39, 40) à haute densité
comprenant chacun une mémoire à accès très rapide (44) physiquement accédée en lecture par les dits ports émetteurs et en écriture par les dits ports récepteurs regroupés dans le même circuit intégré,
connectés à une mémoire à accès rapide (42) dans ledit commutateur au moyen d'un bus local (43) de façon à pouvoir échanger des blocs de données entre mémoires à accès très rapide (44) et mémoire à accès rapide (42) au moyen d'un protocole antémémoire de premier niveau.

Une variante intéressante de l'invention est procurée par une affectation à chaque port émetteur d'une pile d'émission pour contenir des blocs de données adressés dans ledit espace d'adressage logique.

L'adressage logique unique commun à l'ensemble des piles d'émission et des pues de réception présente plusieurs avantages. D'une part, il permet de contrôler de façon ordonnée le traitement de blocs de données dans une pile d'émission en fonction de l'ordre d'arrivée de ces blocs dans une ou plusieurs piles de réception, ce qui est utile pour synchroniser des transferts de blocs de données d'une liaison établie dans le commutateur, la synchronisation à l'extérieur du commutateur étant vérifiée de fait par les connexions de type point à point. D'autre part, la taille de chaque pile n'est pas limitée par des contraintes de taille de mémoire physique. En effet, l'espace d'adressage logique unique permet à chaque pile de disposer d'une mémoire virtuelle supérieure en taille à une mémoire physique dont disposerait immédiatement chaque pile. Ceci permet de sur dimensionner librement chaque sous espace de l'espace d'adressage unique, spécifiquement réservé à une pile. Un mécanisme de correspondance entre adresse logique et adresse physique permet à chaque pile de ne consommer à un instant donné que la mémoire physique dont elle a réellement besoin.
Il est possible d'amplifier les avantages précédemment mentionnés en définissant l'espace d'adressage logique de façon à ce qu'il soit commun au dit commutateur et à au moins un processeur de commande ou un autre commutateur similaire.

On retrouve les aspects mentionnés ci-dessus dans l'art antérieur (Thilakam K. and Jhunjhunwala A. « Proposed high speed packet switch for broadband integrated networks » Computer Communications, vol. 12, n°6, 1 décembre 1989, pages 337-348, XP000083423 ; Koinuma T. et al. « An ATM Switching system based on a distributed control architecture », International Switching symposium, vol. 5, 28 mai 1990, pages 21-26, XP000130921)

La mémoire physique couverte par l'espace d'adressage logique peut être localisée dans le commutateur ou répartie dans plusieurs commutateurs connectés par ailleurs sur une liaison de type bus. Lorsque l'espace d'adressage est commun à un équipement terminal de traitement de données, tel que par exemple un serveur d'images animées synchronisées avec du son, tout ou partie de la mémoire physique peut être localisée dans l'équipement terminal de traitement de données. Cependant, les temps d'accès à la mémoire physique ne doivent pas pénaliser des transferts de blocs de données à haut débit. Or les hauts débits nécessitent à la fois une quantité de mémoire physique importante pour les piles et un accès rapide à cette mémoire physique, ce qui constitue deux contraintes a priori antinomiques.
Selon une particularité supplémentaire de l'invention, les ports émetteurs et les ports récepteurs du commutateur à autonomie d'acheminement sont regroupés dans un ou plusieurs circuits intégrés à haute densité comprenant chacun une mémoire à accès très rapide physiquement accédée en lecture par les dits ports émetteurs et en écriture par les dits ports récepteurs regroupés dans le même circuit intégré. Le ou les dits circuits intégrés sont connectés à une mémoire à accès rapide dans ledit commutateur au moyen d'un bus local de façon à pouvoir échanger des blocs de données entre mémoires à accès très rapide et mémoire à accès rapide au moyen d'un protocole antémémoire de premier niveau.

Les avantages et d'autres détails de l'invention vont ressortir de la description d'un exemple particulier de mise en oeuvre qui va suivre en référence aux figures.
La figure 1 présente un exemple de vue affichée sur un écran dans le cadre d'une vidéoconférence.
La figure 2 présente un exemple de système de vidéoconférence propice à mettre en oeuvre l'invention.
La figure 3 présente un commutateur à autonomie d'acheminement conforme à l'invention. La figure 4 présente un fonctionnement du commutateur conforme à l'invention.
La figure 5 présente un autre fonctionnement du commutateur conforme à l'invention.
La figure 6 présente une variante de fonctionnement présenté figure 5.

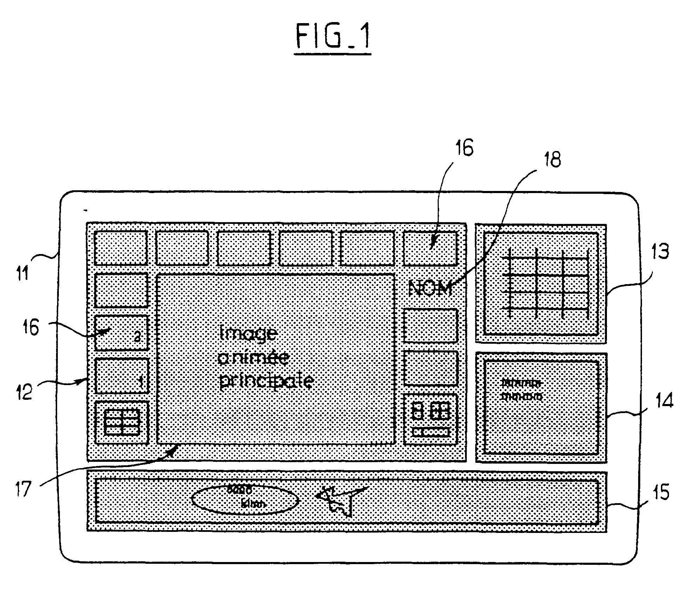

Un participant à une vidéoconférence dispose d'un écran 11 sur lequel s'affiche une vue telle que celle présentée en figure 1. Ladite vue comprend une fenêtre 12 de vidéo-dialogue et une ou plusieurs fenêtres 13, 14, 15 d'info-dialogue.

La fenêtre 12 comprend une image animée globale de type télévision avec, à titre d'exemple non limitatif, une définition de 576 fois 720 points élémentaires de couleur (pixel en anglais), la couleur de chaque point étant prise dans une palette de seize millions de couleurs disponibles. Ladite image animée est composée d'une ou plusieurs images animées 16, de petite taille, et d'une image animée 17, de grande taille. Chaque image animée 16 est destinée à montrer un participant différent à la vidéoconférence. Lorsqu'une prise de parole est attribuée à un participant particulier, celui-ci apparaît sur l'image animée 17. Si un emplacement 18 de l'image animée globale est réservé pour l'une des images animées 16, destinée à montrer ce participant particulier, l'emplacement 18 est libéré. On peut prévoir d'utiliser l'emplacement 18 pour afficher une désignation du participant particulier, telle qu'un nom, un titre ou une effigie d'entité à laquelle il appartient. Eventuellement, chaque participant à la vidéoconférence se voit dans l'une des images animées 16 ou 17.

Les fenêtres 13, 14 et 15 sont destinées à visualiser des données informatiques telles que par exemple le contenu d'un fichier de type tableur, texte ou autre dans la fenêtre 13, un gestionnaire de fichiers dans la fenêtre 14 et un tableau blanc sur lequel les participants peuvent venir écrire, dans la fenêtre 15.

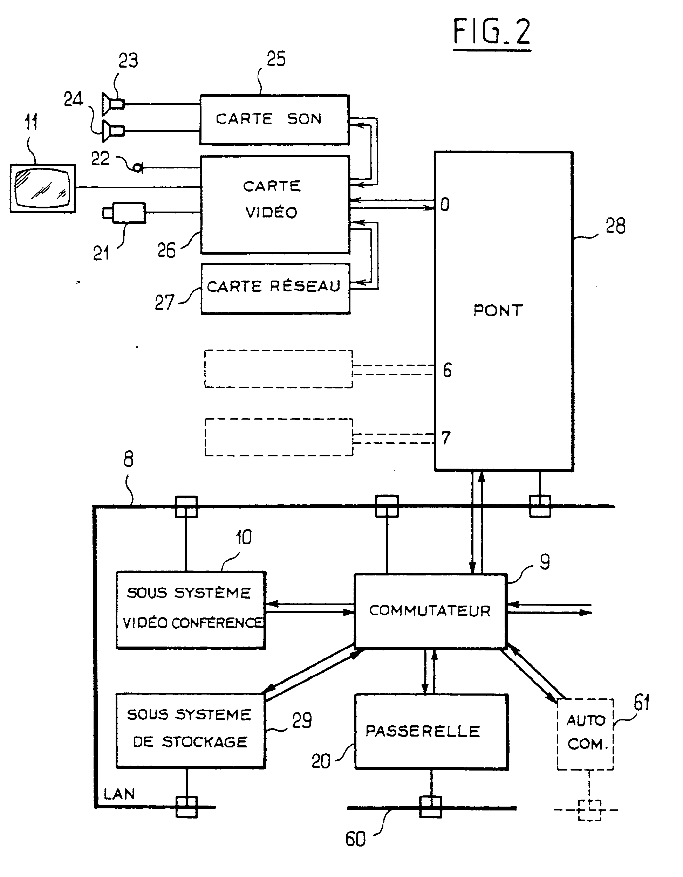

En référence à la figure 2, une personne désirant prendre part à une vidéoconférence se place devant un terminal, dont seuls sont représentés ici les éléments essentiels aux fonctions de vidéoconférence. Ce terminal est par exemple un micro-ordinateur ou une station de travail, équipé d'une caméra 21, d'un microphone 22, de l'écran 11 décrit précédemment, et d'au moins un haut-parleur 23 alimenté par une carte son 25. Un deuxième haut-parleur 24 alimenté par la même carte son 25 permet d'obtenir un son stéréophonique. Une carte d'adaptation 26 est connectée d'une part à la caméra 21, au microphone 22 et à la carte son 25, et d'autre part à une carte réseau 27 et à un circuit 28. Le circuit 28 possède plusieurs coupleurs d'entrée-sortie 0,...,6,7 sur chacun desquels peut se connecter la carte d'adaptation 26 de l'un parmi différents terminaux, jusqu'à huit dans l'exemple de la figure 2.

Le circuit 28 est connecté sur un premier réseau local 8 et à un commutateur 9. Le commutateur 9 est connecté d'une part au premier réseau local 8, à un sous système de vidéoconférence 10 et à un sous système de stockage 29 eux même connectés au réseau local 8, et d'autre part à une passerelle 20 et éventuellement à un autocommutateur téléphonique 61. La passerelle 20 ou l'autocommutateur téléphonique 61 donnent accès à un réseau étendu 60.

Le réseau local 8 reliant le commutateur 9 à un ou plusieurs circuits 28, au sous système de vidéoconférence 10, au sous système de stockage 29, de type multipoints, est plus particulièrement dédié à la transmission de données informatiques.

La carte d'adaptation 26 exécute des fonctions vidéoconférence et télécommunication. La carte d'adaptation 26 a pour but d'interfacer le terminal avec un réseau par exemple de type connu ATM, de faire une compression décompression temps réel de signaux vidéo avec un premier taux faible TCD tel que le réalise par exemple une transformée en cosinus discrète, de multiplexer démultiplexer des données informatiques, du son et des images animées.

Le circuit 28 réalise une interface cuivre / fibre optique avec le commutateur 9.

Le commutateur 9 réalise le routage des communications son et vidéo. Une connexion par fibres optiques du commutateur 9 à un ou plusieurs circuits 28, au sous système de vidéoconférence 10, au sous système de stockage 29, et éventuellement à la passerelle 20 ou inclusivement à l'autocommutateur téléphonique 61, réalise un réseau en étoile qui constitue un second réseau local plus particulièrement dédié à la transmission de son et d'images.

Le sous système 10 réalise les fonctions vidéo processeur et audio processeur telles que celles de la norme ITU/H.231. Le sous système est essentiellement constitué d'un serveur vidéo non détaillé qui constitue un équipement terminal de traitement de données pour composer une ou plusieurs images animées synchronisées avec du son telles que celle décrite en référence à la figure 1.

Le sous système de stockage 29 a pour fonction d'emmagasiner les données vidéo (son et images animées) et les données informatiques échangées pendant une vidéoconférence. Ceci permet de revisionner tout ou partie de la conférence en différé et d'en archiver les éléments essentiels. En consultant le sous système de stockage 29, un participant intervenant en cours de conférence peut prendre connaissance de points discutés en son absence pour se mettre rapidement à jour et mieux participer à la suite des débats.

Le commutateur 9 est réalisé au moyen d'un ou plusieurs commutateurs à autonomie d'acheminement conforme à l'invention, de façon à pouvoir véhiculer une grande quantités de données représentant des images animées synchronisées avec du son.

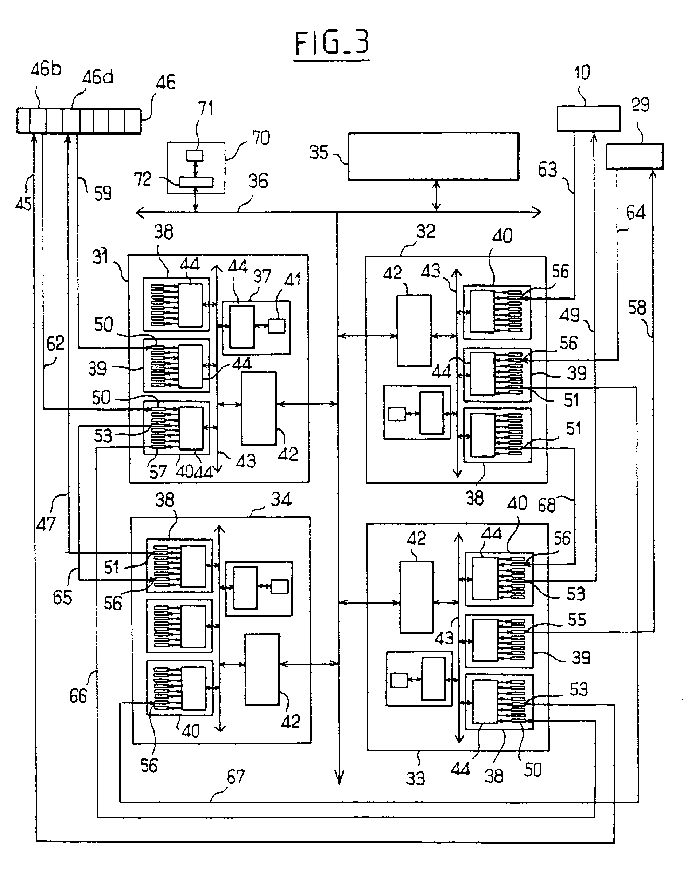

La figure 3 présente une mise en oeuvre possible de commutateurs conformes à l'invention. On y distingue un premier ensemble de commutateurs à autonomie d'acheminement 31, 32 et un deuxième ensemble de commutateurs à autonomie d'acheminement 33, 34. Un commutateur 31, 32, 33, 34 comprend ici trois circuits intégrés à haute densité 38, 39, 40. Chaque circuit 38, 39, 40 comprend ici quatre ports émetteurs 51, 53, 55, 57 et quatre ports récepteurs 50, 52, 54, 56. Le nombre de circuits intégrés et le nombre de ports sur les circuits intégrés n'ont été choisis ici que pour ne pas surcharger inutilement la figure.

Chaque port émetteur des commutateurs 33 et 34 est destiné à être raccordé à un équipement terminal de traitement de données tel que le sous système vidéoconférence 10 et le sous système de stockage 29 proches, ou le circuit 28 distant. Par exemple sur le commutateur 33, le sous système 10 est connecté par une ligne 49 au port 53 du circuit 40, le sous système 29 est connecté au port 55 du circuit 39. D'autres ports disponibles des circuits 38 à 40 peuvent être connectés aux sous systèmes 10 et 29 par d'autres lignes non représentées, de façon à augmenter le débit de données vers ces équipements. Les sous systèmes 10 et 29 étant ici considérés proches de l'ensemble des commutateurs 33 et 34, les lignes 49 et 58 sont réalisées au moyen de câbles électriques. Par contre, pour un équipement terminal de traitement de données distant tel que le circuit 28, il est avantageux d'utiliser des fibres optiques. Chaque fibre optique est alors raccordée sur un convertisseur optoélectronique 46b, 46d d'un bornier 46 proche des commutateurs 33 et 34. Les commutateurs 33 et 34 sont alors simplement raccordés sur le bornier 46 au moyen de câbles électriques. Par exemple sur le commutateur 33, le convertisseur 46b est connecté par une ligne 45 au port 53 du circuit 38. Sur le commutateur 34, le convertisseur 46d est connecté par une ligne 47 au port 51 du circuit 38. D'autres ports disponibles des circuits 38 à 40 peuvent être connectés au bornier 46 par d'autres lignes non représentées, de façon à augmenter le débit de données vers ces équipements ou à répartir le débit de données vers différents circuits 28 raccordés par fibres optiques sur le bornier 46.

Chaque port émetteur des commutateurs 31 et 32 est destiné à être raccordé à un port récepteur 50, 52, 54, 56 des commutateurs 33 et 34. Par exemple sur le commutateur 31, le port 56 du circuit 38 du commutateur 34 est connecté par une ligne 65 au port 53 du circuit 40, le port 50 du circuit 38 du commutateur 33 est connecté au port 57 du circuit 40. D'autres ports disponibles des circuits 38 à 40 peuvent être connectés aux commutateurs 33 et 34 par d'autres lignes non représentées, de façon à augmenter le débit de données vers ces commutateurs. Les commutateurs 31 et 32 étant ici considérés proches de l'ensemble des commutateurs 33 et 34, les lignes 65 et 66 sont réalisées au moyen de câbles électriques. Par contre, pour des commutateurs distants, il est avantageux d'utiliser des fibres optiques raccordée sur un convertisseur optoélectronique du bornier 46 proche des commutateurs 31 et 32. Les commutateurs 31 et 32 sont alors simplement raccordés sur le bornier 46 au moyen de câbles électriques. Les commutateurs représentés sur la figure 3 sont considérés proches. Par exemple sur le commutateur 32, le port 56 du circuit 40 du commutateur 34 est connecté par une ligne 67 au port 51 du circuit 39, le port 56 du circuit 40 du commutateur 33 est connecté au port 51 du circuit 38. D'autres ports disponibles des circuits 38 à 40 peuvent être connectés aux commutateurs 33 et 34 par d'autres lignes non représentées, de façon à augmenter le débit de données vers ces commutateurs.

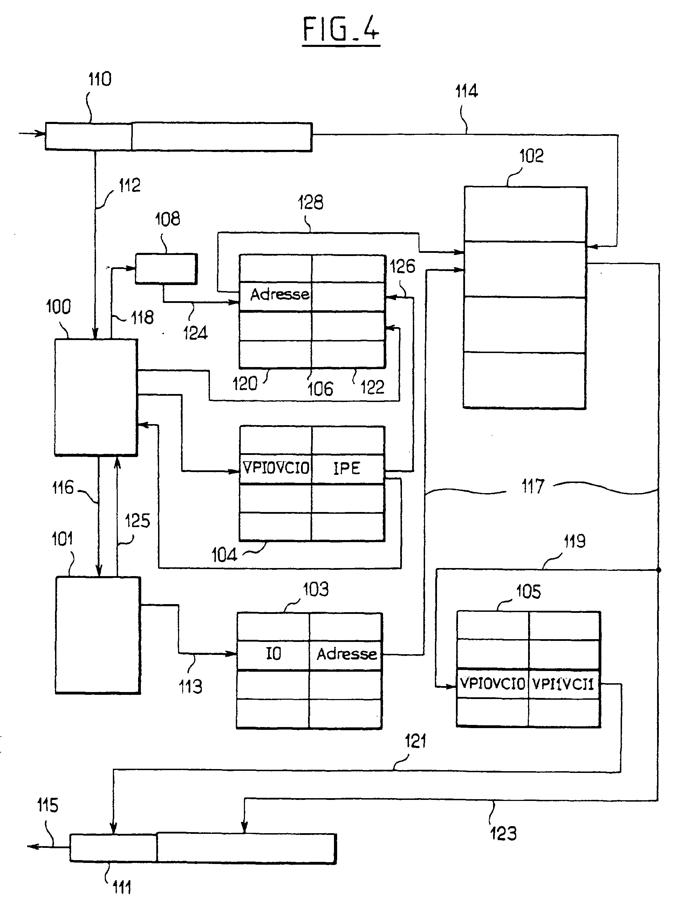

La figure 4 permet d'expliquer un fonctionnement du commutateur à autonomie d'acheminement au moyen de machines de réception 100 et de machines d'émission 101, sans se préoccuper dans un premier temps de la situation physique de ces machines dans le commutateur. A chaque port récepteur du commutateur est affecté une pile de réception 102 et à chaque port émetteur est affecté une pile d'émission 103. La pile de réception 102 est constituée de blocs de données de taille fixe, adressables dans un espace d'adressage logique unique. La pile d'émission 103 est constituées de multiplets, chaque multiplet contenant autant de bits que nécessaires pour coder une adresse du dit espace d'adressage logique unique.

Le port récepteur reçoit des données de l'extérieur du commutateur, constituées de séries de multiplets binaires, définies dans un format déterminé. En technologie de type Ethernet, le format est celui de trames contenant chacune un nombre variable de multiplets (byte en anglais). Une trame comprend une entête et un corps de données utiles. Les données utiles sont celles traitées par les équipement terminaux de traitement de données. L'entête est essentiellement constituée d'un multiplet délimiteur de début de trame, suivi de multiplets codant une adresse de destination de la trame, suivis de multiplets codant une adresse source, suivis de multiplets codant une quantité de multiplets contenues dans le corps de données utiles. En technologie de type ATM, le format est celui de cellules contenant chacune un nombre constant de multiplets, typiquement cinquante trois multiplets. Une cellule comprend une entête et un corps de données utiles. Le corps de données utiles contient par exemple quarante huit multiplets traités par les équipements terminaux de traitement de données. L'entête contient alors cinq multiplets pour coder un identificateur de conduit virtuel VPI (virtual path identifier en anglais), un identificateur de canal virtuel VCI (virtual channel identifier en anglais) dans le conduit virtuel et des indicateurs de contrôle de communication liés au canal virtuel. Une valeur particulière de multiplets, par exemple nulle, code un état vide de la cellule.

Il est possible de mettre en oeuvre l'invention tant sur des trames que sur des cellules. Cependant une mise en oeuvre sur des cellules présente un avantage de simplicité et de performances qui facilitent dans un premier temps la description en référence à la figure 4.

A la pile de réception 102 est associée une table de routage 104 dont chaque ligne est indicée en correspondance avec chaque conduit virtuel VPI0 et chaque canal virtuel VCI0 dont le port récepteur constitue un support physique. Chaque ligne contient autant d'indicateurs logiques IPE que le commutateur contient de ports émetteurs. A chaque port émetteur est affecté un indicateur logique IPE, par exemple un bit, dont un premier état signifie que le port émetteur constitue le support physique pour contenir le conduit virtuel VPI0 et le canal virtuel VCI0 en correspondance avec la ligne indicée de la table 104. Tout autre état de l'indicateur logique signifie que le port émetteur ne constitue pas le support physique pour contenir le conduit virtuel VPI0 et le canal virtuel VCI0 en correspondance avec la ligne indicée de la table 104.

A la pile d'émission 103 est associée une table de routage 105 dont chaque ligne est indicée en correspondance avec chaque conduit virtuel VPI0 et chaque canal virtuel VCI0 dont le port émetteur constitue le support physique. Chaque ligne contient un indicateur de conduit virtuel VPI1 et un indicateur de canal virtuel VCI1 sur lesquels le conduit virtuel VPI0 et le canal virtuel VCI0 sont commutés, de sorte que le port émetteur constitue un support physique pour contenir le conduit virtuel VPI1 et le canal virtuel VCI1.

Lorsqu'une cellule est présentée (112) par le port récepteur à la machine de réception 100 affectée à ce port, la machine de réception traite la cellule de la façon suivante. Si la valeur de l'entête identifie un état vide de la cellule, la cellule est ignorée. Dans le cas contraire, le contenu de la cellule est rangé (114) dans un bloc disponible de la pile 102. Dans l'exemple de mise en oeuvre décrit, la taille d'un bloc est de soixante quatre multiplets. Pour une cellule de cinquante trois multiplets, onze multiplets restent donc disponibles. Une interruption I0, accompagnée de l'adresse du bloc de la pile 102 où est rangée la cellule présentée, est envoyée (116) à chaque machine d'émission 101 affectée à un port émetteur constituant le support physique pour contenir le conduit virtuel VPI0 et le canal virtuel VCI0 identifiés dans l'entête 110 de la cellule présentée.

Chaque machine d'émission 101 affectée à un port émetteur, accomplit essentiellement deux fonctions, une première fonction de prise en compte des interruptions I0 en provenance des machines de réception 100, une deuxième fonction d'émission de cellules.

Selon la première fonction, à chaque réception d'une interruption I0 en provenance d'une machine de réception 100, l'adresse accompagnant cette interruption est rangée (113) dans la pile d'émission 103.

Selon la deuxième fonction, des cellules sont émises (115) de façon continue sur le port émetteur. Si la pile 103 est vide, une valeur particulière des indicateurs VPI1 et VCI1 est chargée dans l'entête de la cellule émise pour signifier qu'elle constitue une cellule vide. Cette valeur particulière est par exemple zéro. Si la pile 103 n'est pas vide, la première adresse rangée dans la pile en est retirée de façon à lire (117) le bloc correspondant à cette adresse. Les indicateurs VPI0 et VCI0 sont extraits (119) des cinq premiers multiplets du bloc de façon à pointer sur la ligne de la table de routage 105 indicée en correspondance avec les indicateurs VPI0 et VCI0. Les indicateurs VPI1 et VCI1 contenus dans la ligne pointée sont rangés (121) dans l'entête 111 de la cellule émise et les quarante huit multiplets suivant les cinq premier multiplets du bloc sont rangés (123) dans le corps de données utiles de la cellule, les multiplets éventuellement restants sont ignorés. Une interruption Il est envoyée (125) à la machine de réception 100 pour lui signifier que le bloc de la pile 102 a été lu par la machine d'émission 101 considérée. En retirant systématiquement la première adresse rangée dans la pile 103, les corps utiles de cellules sont émis dans l'ordre de réception des interruptions 10 et par conséquent dans l'ordre de présentation des cellules aux machines de réception 100.

On peut imaginer différents moyens pour rendre disponibles les blocs de la pile 102 après lecture par les machines 101 puis pour utiliser ces blocs disponibles. En référence à la figure 4, la machine 100 dispose d'une pile d'adresses 106 dont nous expliquons à présent la structure. Chaque ligne de la pile 106 contient deux multiplets 120, 122. Le premier multiplet 120 de la première ligne contient une première adresse de bloc de la pile 102. Le premier multiplet de chaque ligne suivante de la pile 106 contient une adresse suivante de celle contenue à la ligne précédente de la pile 106. Initialement, le deuxième multiplet 122 de chaque ligne de la pile 106 contient un pointeur sur la ligne suivante de la pile 106, à l'exception du deuxième multiplet de la dernière ligne qui contient un pointeur sur la première ligne. Un registre 108 contient un pointeur sur une ligne dont le premier multiplet contient une adresse de premier bloc disponible de la pile 102, initialement pointant sur la première ligne de la pile 106. On obtient ainsi initialement une pile circulaire d'adresses constituée des premiers multiplets 120 de la pile 106 dont l'adresse du bloc disponible suivant est donnée par la ligne pointée par le deuxième multiplet 122 de chaque ligne.

Pour ranger (114) dans la pile 102 une cellule présentée, la machine de réception 100 se branche (118) sur la ligne de la pile 106 pointée (124) par le contenu du registre 108 et range dans le registre 108 la valeur du deuxième multiplet de la ligne pointée. La machine 100 range (126) dans le deuxième multiplet 122 de la ligne pointée, la ligne de la table de routage 104 indicée en correspondance avec les indicateurs VPI0 et VCI0 de la cellule présentée. La machine 100 range (114) la cellule présentée dans le bloc adressé (128) par le premier multiplet de la ligne pointée et envoie (116) à chaque machine d'émission dont l'indicateur logique IPE du port émetteur signale une constitution de support physique, une interruption I0 accompagnée de l'adresse de ligne pointée (124) de la pile 106 et de la valeur du premier multiplet 120 de cette ligne pointée.

A réception d'une interruption Il envoyée (125) par une machine d'émission 101 pour une ligne pointée de la pile 106, la machine de réception 100 annule l'indicateur logique correspondant à la machine d'émission 101 dans le deuxième multiplet 122 de la ligne pointée. Une valeur nulle du deuxième multiplet de la ligne pointée signifie que toutes les machines d'émission 101 concernées ont lu le bloc adressé (128) par le premier multiplet 120. La machine de réception 100 range alors dans le deuxième multiplet de la ligne pointée la valeur du registre 108 et range simultanément dans le registre 108 un pointeur sur la ligne ainsi libérée. Ceci permet d'utiliser un bloc disponible dès que celui-ci a été lu par toutes les machines d'émission concernées.

Pour une mise en oeuvre de l'invention sur des trames de longueur variable telles qu'en technologie de type Ethernet, plusieurs blocs de la pile 102 peuvent être nécessaires pour mémoriser temporairement chaque trame en attente d'émission. Ceci nécessite pour la pile 103 de pouvoir contenir plusieurs adresses de la pile 102 liées à une même interruption I0.

En technologie de type Ethernet, l'entête 110, 111 d'une trame contient une adresse IP de destination conservée identique sur l'ensemble des parcours de la trame depuis l'équipement terminal de traitement de données émetteur, jusqu'à l'équipement terminal de traitement de données récepteur en mode à diffusion unique (monocast en anglais), jusqu'aux équipements terminaux de traitement de données récepteurs en mode à diffusion multiple (multicast en anglais) ou à diffusion générale (broadcast en anglais). La table de routage 105 est alors inutile car la trame est émise (115) telle que contenue dans un ou plusieurs blocs de la pile 102.

Quelque soit la technologie utilisée, Ethernet, ATM ou autre, il est intéressant de mettre en oeuvre chaque machine de réception 100 à proximité physique du port récepteur sur lequel elle s'exécute et chaque machine d'émission 101 à proximité physique du port émetteur sur lequel elle s'exécute, de façon à obtenir de bonnes performances en rapidité de traitement. Il en est de même pour les piles de réception 102 et les piles d'émission 103. Pour ce faire, un circuit à très haute densité d'intégration 38 comprend plusieurs ports récepteurs 50, 52, 54, 56, plusieurs ports émetteurs 51, 53, 55, 57 et une mémoire statique 44 pour contenir les machines de réception 100 et des blocs des piles de réception 102 affectées aux ports récepteurs 50, 52, 54, 56 ainsi que les machines d'émission 101 et des blocs des piles d'émission 103 affectées aux ports émetteurs 51, 53, 55, 57. Ainsi, les échanges de données pour gérer les réceptions et les émissions peuvent se faire à vitesse élevée dans un même circuit à très haute densité d'intégration. Cependant, malgré les possibilités de très haute intégration actuelles et futures, les quantités de mémoire, de ports émetteurs et de ports récepteurs intégrables sur un même circuit restent limitées. On conçoit par exemple aujourd'hui de mettre douze ports récepteurs et douze ports émetteurs sur un même circuit intégré.

Tous les ports émetteurs et récepteurs d'un même circuit intégré ne fonctionnent pas nécessairement à pleine capacité de leur charge à tout instant. Il est alors avantageux de ne pas faire résider systématiquement l'intégralité des piles de réception 102 dans la mémoire statique 44 mais dans une mémoire extérieure au circuit intégré, en communication avec la mémoire 44 au moyen du bus rapide 43 mis en oeuvre dans le commutateur objet de l'invention. Les blocs de données constituant les piles de réception 102 sont adressés dans le circuit intégré au moyen d'un espace d'adressage logique commun avec la mémoire extérieure au circuit intégré de façon à ce que ne soient physiquement présentes à chaque instant dans la mémoire statique 44 que des copies de bloc effectivement utilisées par des machines de réception 100 ou d'émission 101 en exécution dans le circuit 38.

Le commutateur 31 de la figure 3 comprend une mémoire statique 42 en communication avec la mémoire statique 44 au moyen d'un protocole de cohérence antémémoire de premier niveau sur le bus 43. Le protocole de cohérence antémémoire de premier niveau est de type à écriture différée (write back en anglais). Sans nous étendre sur ce type de protocole connu, rappelons simplement qu'une écriture de copie de bloc, depuis la mémoire statique 42 vers la mémoire statique 44, n'est déclenchée que si une lecture de bloc entre en conflit d'adressage avec une copie de bloc contenue dans la mémoire statique 44. La mémoire statique 42 contient des copies physiques de bloc de piles 102 dont la mémoire peut faire des copies physiques au fur et à mesure des besoins des machines de réception 100 et des machines d'émission 101. Pour une charge faible sur le circuit 38, toutes les copies à jour de bloc sont situées dans la mémoire statique 44. Si la charge augmente, des copies à jour peuvent être échangées au moyen du protocole de cohérence antémémoire de premier niveau avec la mémoire statique 42. La mémoire statique 42 remplit alors une fonction d'accumulateur pour absorber des surcharges du circuit 38. La mémoire statique 42 est d'accès moins rapide aux ports émetteurs et récepteurs mais de taille supérieure à la mémoire statique 44.
Pour augmenter le nombre de ports récepteurs et de ports émetteurs au delà de ce que peut accepter un seul circuit intégré, le commutateur 31 de la figure 3 comprend d'autres circuits 39, 40 à haute densité d'intégration identiques au circuit 38. Les mémoires statiques 44 de chaque circuit 38, 39, 40 sont en communication entre elles et avec la mémoire 42 au moyen du protocole antémémoire de premier niveau ci-dessus cité.

Pour augmenter encore les capacités d'adressage logique sans sur dimensionner inutilement les mémoires 42 et 44, il est possible de faire communiquer la mémoire statique 42 avec une mémoire dynamique 35 au moyen d'un protocole antémémoire de deuxième niveau sur le bus 36. Seules sont alors présentes dans la mémoire statique 42, des copies de blocs de piles de réception 102 pour lesquelles un port récepteur du circuit 38 reçoit des cellules non vides.

Considérons l'exemple d'une machine d'émission 101 qui se trouve dans un circuit 39, autre que le circuit 38 où se trouve la machine de réception 100 qui écrit dans la pile 102 un bloc concernant ladite machine d'émission 101. En lisant le bloc considéré, la machine d'émission 101 range une copie physique du bloc dans la mémoire 44 du circuit 39 par mise en oeuvre du protocole de cohérence antémémoire de premier niveau. La mise en oeuvre du protocole de cohérence antémémoire de premier niveau fait que la mémoire 42 remet à jour sa copie physique de bloc au passage sur le bus local 43. Il convient d'apprécier que la mise en oeuvre du protocole de cohérence antémémoire de premier niveau fait que la mémoire 44 du circuit 39 ne se charge que du bloc émis (115) par la machine 101. L'emplacement physique de ce bloc dans la mémoire 44 du circuit 39 peut être rendu disponible pour le mise en oeuvre du protocole de cohérence antémémoire de premier niveau en forçant par exemple une invalidation de copie de ce bloc dans la mémoire 44 du circuit 39 après émission de ce bloc par le port émetteur concerné. Les explications fournies sur l'exemple ici considéré restent valables pour toute machine de réception 100 et toute machine d'émission 101 des circuits 38, 39, 40 du commutateur 31 dans lequel les piles d'émission 102 sont adressées au moyen d'un espace d'adressage logique unique.

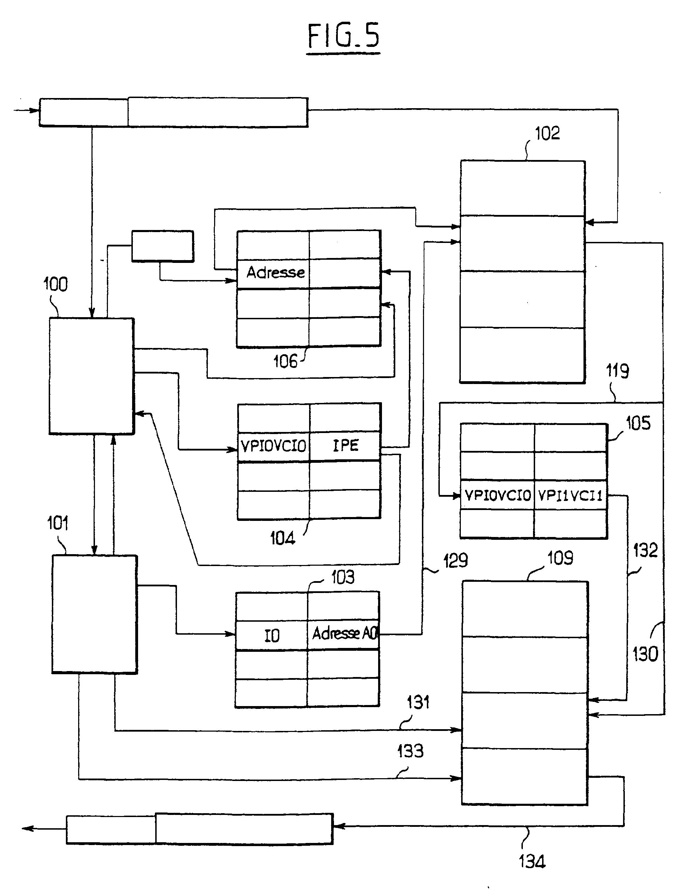

En référence à la figure 5, chaque machine d'émission 101 dispose d'une pile d'émission 109 constituée de blocs de données contenant des trames ou des cellules à émettre sur le port d'émission associé. Lorsqu'une ou plusieurs machines d'émission 101, définies par le code IPE de la table 104, reçoivent une interruption I0 accompagnée d'une adresse logique A0, de la machine de réception 100, chaque machine d'émission 101 lit (129) le bloc adressé par A0 dans la pile 102 et écrit (130) le bloc dans sa pile d'émission 109 à une adresse logique déterminée (131) sur un emplacement libre de la pile 109. Parallèlement, la machine 101 lit (119) les indicateurs VPI0VCI0 et les remplace (132) dans la pile 109 par les valeurs VPI1VCI1 données par la table 105. Indépendamment, la machine d'émission 101 lit (133) les blocs de la pile 109 en fonction de priorités d'émission, pour émettre (134) leur contenu sur le port d'émission associé. Chaque émission du contenu d'un bloc libère un emplacement dans la pile 109.

De même qu'une machine de réception 100 peut envoyer une interruption 10 à plusieurs machines d'émission 101, une machine d'émission 101 peut recevoir des interruptions I0 en provenance de plusieurs machines de réception 100 différentes. Il se peut alors qu'une machine d'émission 101 considérée écrive dans sa pile d'émission 109 des blocs en provenance de plusieurs piles de réception 102. Un flux d'écriture (130), supérieure en valeur au flux de lecture (134) dans la pile d'émission 109, augmente la taille de la pile d'émission 109. Ceci ne pose pas de problème en adressage logique car la taille maximale de la pile peut être arbitrairement fixée à une valeur suffisamment grande pour ne jamais être atteinte. La mémoire statique 44, nécessairement réduite pour être intégrée dans un circuit 38, 39 ou 40, ne peut contenir qu'un nombre limité de copies physiques de blocs de la pile 109. Lorsqu'une écriture (130) dans la pile 109 d'un nouveau bloc nécessite un nouvel emplacement dans la mémoire statique 44 pour y mémoriser une copie physique de ce nouveau bloc et qu'aucun emplacement n'est disponible dans la mémoire statique 44, le protocole de cohérence antémémoire de premier niveau remplace une copie physique d'ancien bloc dans la mémoire statique 44 par la copie physique de nouveau bloc. La mémoire statique 42 en communication avec la mémoire statique 44 au moyen du protocole de cohérence antémémoire de premier niveau permet de conserver une copie valide de l'ancien bloc qui pourra être réutilisée lors de la lecture (134) de cet ancien bloc. Le protocole de cohérence de premier niveau fera alors circuler cette copie d'ancien bloc sur le bus 43 vers la mémoire 44 associée à la machine d'émission 101. Il convient d'apprécier le rôle d'accumulateur joué par la mémoire statique 42 grâce au protocole de cohérence antémémoire de premier niveau. En effet, lorsqu'une copie physique de la pile 109 ne tient pas intégralement dans la mémoire statique 44, une copie physique de la pile 109 reste disponible dans la mémoire statique 42.

Si la machine d'émission 101 s'exécute sur un circuit 38, 39, 40, différent du circuit 38, 39, 40 sur lequel s'exécute la machine de réception 100, la lecture (129) d'un bloc de la pile 102 par la machine d'émission 101 provoque une circulation de ce bloc sur le bus local 43. A la première lecture de ce bloc, le protocole de cohérence antémémoire de premier niveau fait que la mémoire statique 42 remet à jour sa copie de ce bloc dans la pile 102. Si la copie de ce bloc de la pile 102 est écrasée dans la mémoire 44 par écriture d'un nouveau bloc à une autre adresse logique de la pile 102, une circulation du bloc écrasé sur le bus 43 n'est nécessaire que s'il n'existe pas de copie à jour du bloc écrasé dans la mémoire 42. Si, dans la mémoire 42, il existe une copie à jour du bloc écrasé dans la mémoire 44 sur laquelle s'exécute la machine de réception 101, le protocole de cohérence antémémoire de premier niveau fait que les lectures ultérieures de ce bloc se feront à partir de la copie valide de ce bloc dans la mémoire 42. Le rôle d'accumulateur joué par la mémoire 42 évite de perdre des cellules ou des trames comprises dans les blocs des piles d'émission et de réception qui auraient pu résulter d'une saturation de ces piles.

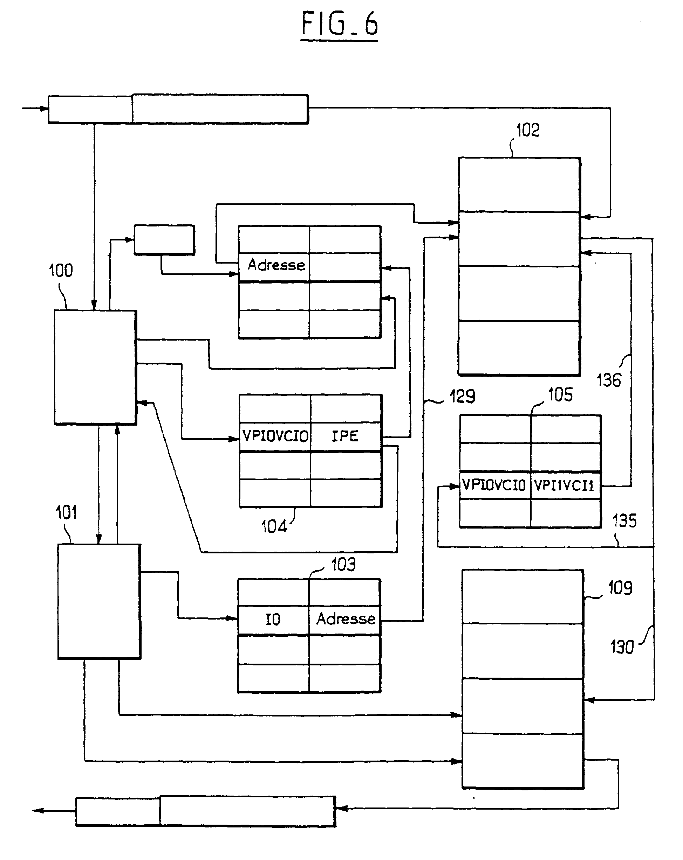

En référence à la figure 6, les identificateurs VPI0VCI0 sont lus (135) dans la pile de réception 102 puis remplacé (136) dans la pile de réception 102 à l'aide de la table de correspondance 106 par de nouveaux identificateurs VPI1VCI1. Les identificateurs VPI1VCI1 sont alors identiques pour toutes les machines de réception 101 concernées par les mêmes identificateurs VPI0VCI0. Une écriture (130) de bloc dans la pile 109 à partir de la pile 102 se fait alors avec la valeur finale des identificateurs VPI1VCI1. En l'absence de traitement ultérieur sur la valeur du bloc écrit dans la pile 109, l'écriture (130) en combinaison avec la mise en oeuvre du protocole de cohérence antémémoire de premier niveau provoque une mise à jour de la copie de ce bloc dans la mémoire 42. Si une copie de bloc de la pile 109 dans la mémoire 44 nécessite d'être remplacée par le protocole de cohérence antémémoire de premier niveau, il n'est plus nécessaire de rapatrier cette copie de bloc dans la mémoire 42 car celle-ci en détient déjà une copie à jour. Ceci économise une circulation de bloc sur le bus local 43.

Pour augmenter le nombre de ports récepteurs et de ports émetteurs au delà du nombre contenu dans le commutateur 31, la figure 3 présente une disposition en papillon (butterfly en anglais) de commutateurs 32, 33, 34 identiques au commutateur 31. La mémoire 42 de chaque commutateur 31, 32, 33, 34 communique avec la mémoire 35 au moyen du protocole de cohérence antémémoire de deuxième niveau ci-dessus cité. Avec une disposition en papillon d'un nombre supérieur de commutateurs, éventuellement sur plusieurs niveaux, il est possible de multiplier de façon quasi illimitée le nombre de ports récepteurs et de ports émetteurs disponibles pour les équipements terminaux de traitement de données connectés sur ces commutateurs.

La mémoire statique 42 est dimensionnée de sorte à pouvoir contenir un adressage physique de toutes les piles de réception et d'émission adressées logiquement dans les circuits 38, 39 et 40. D'autre part, chaque commutateur 31, 32, 33, 34, dispose d'un sous espace d'adressage logique propre, distinct des sous espaces d'adressage logique dont disposent les autres commutateurs. Chaque sous espace d'adressage logique est dimensionné de façon à pouvoir adresser l'ensemble des piles de réception et d'émission d'un même commutateur. Ainsi, des mises à jour de blocs de données dans les piles de réception et d'émission provoquées par la réception et l'émission de cellules sur les ports d'un commutateur ne font pas intervenir le protocole de cohérence antémémoire de deuxième niveau.

En référence à la figure 3, le commutateur à autonomie d'acheminement 31 comprend un circuit à haute densité d'intégration 37. Le circuit 37 comprend un microprocesseur 41 et une mémoire statique 44 en communication avec les mémoires 44 des circuits 38, 39, 40 et avec la mémoire 42 au moyen du protocole de cohérence antémémoire de premier niveau sur le bus 43. Cette communication permet au microprocesseur 41 de tenir à jour les tables de correspondance 104 et 105 référencées sur les figures 4 à 6 en exécutant un protocole de signalisation qui concerne le commutateur 31.

Dans le cas d'une disposition en papillon de plusieurs commutateurs 31, 32, 33, 34 identiques, un circuit à haute densité d'intégration 70 comprend un microprocesseur 71 et une mémoire statique 72. La mémoire statique 72 est en communication avec la mémoire 35 et avec les mémoires 42 de chaque commutateur 31, 32, 33, 34 au moyen du protocole de cohérence antémémoire de deuxième niveau sur le bus 36. Cette communication permet au microprocesseur 71 de tenir à jour les tables de correspondance 104 et 105 référencées sur les figures 4 à 6 en exécutant un protocole de signalisation qui concerne l'ensemble des commutateurs 31, 32, 33, 34. Ceci permet d'optimiser le protocole de signalisation de façon à considérer l'ensemble des commutateurs disposé en papillon comme un seul commutateur à autonomie d'acheminement.

## Revendications

1. Commutateur à autonomie d'acheminement (31, 33)
comprenant plusieurs ports émetteurs (51, 53, 55, 57) et plusieurs ports récepteurs (50, 52,54, 56),
chaque port émetteur étant destiné à être connecté à un équipement terminal de traitement de données (10, 28,29) récepteur ou à un port récepteur d'un autre commutateur à autonomie d'acheminement (32, 34),
chaque port récepteur étant destiné à être connecté à un équipement terminal de traitement de données (10, 28, 29) émetteur ou à un port émetteur d'un autre commutateur à autonomie d'acheminement (32, 34),
une pile de réception (102) adressable dans un espace d'adressage logique unique affectée à chaque port récepteur,
une pile d'émission (103) pour contenir des adresses du dit espace d'adressage logique unique affectée à chaque port émetteur,
**caractérisé en ce que**
les ports émetteurs et les ports récepteurs du commutateur à autonomie d'acheminement sont regroupés dans un ou plusieurs circuits intégrés (38, 39, 40) à haute densité
comprenant chacun une mémoire à accès très rapide (44) physiquement accédée en lecture par les dits ports émetteurs et en écriture par les dits ports récepteurs regroupés dans le même circuit intégré,
connectés à une mémoire à accès rapide (42) dans ledit commutateur au moyen d'un bus local (43) de façon à pouvoir échanger des blocs de données entre mémoires à accès très rapide (44) et mémoire à accès rapide (42) au moyen d'un protocole antémémoire de premier niveau.

2. Commutateur à autonomie d'acheminement (31) selon la revendication 1, **caractérisé en ce qu'**il comprend un circuit à haute densité d'intégration (37) comprenant un microprocesseur (41) et une mémoire statique (44) en communication avec les mémoires (44) des circuits (38, 39, 40) et avec la mémoire (42) au moyen du protocole de cohérence antémémoire de premier niveau sur le bus local (43).

3. Commutateur à autonomie d'acheminement (31) selon l'une des revendications 1 à 2, **caractérisé en ce que** l'espace d'adressage logique est commun au dit commutateur et à au moins un processeur de commande (71) ou un autre commutateur similaire (33).

4. Commutateur à autonomie d'acheminement (31) selon l'une des revendications 1 à 3, **caractérisé en ce que** ladite mémoire à accès rapide (42) est connectée à une mémoire dynamique (35) au moyen d'un bus externe (36) de façon à pouvoir échanger des blocs de données entre la mémoire a accès rapide (42) et la mémoire dynamique (35) au moyen d'un protocole antémémoire de deuxième niveau

5. Commutateur à autonomie d'acheminement (31) selon l'une des revendications 1 à 4, **caractérisé en ce que** ladite mémoire à accès rapide (42) est connectée à une ou plusieurs mémoires à accès rapide (42) d'autres commutateurs identiques au moyen du bus externe de façon à pouvoir échanger des blocs de données entre les mémoires à accès rapide (42) au moyen du protocole antémémoire de deuxième niveau.

6. Commutateur à autonomie d'acheminement (31) selon l'une des revendications 1 à 5, **caractérisé en ce que** les ports récepteurs correspondants et lesports émetteurs correspondants sont agencés pour recevoir et émettre respectivement des cellules formatées de manière à contenir chacune un nombre constant de multiplets.

7. Commutateur à autonomie d'acheminement (31) selon l'une des revendications 1 à 6, **caractérisé en ce qu'**il est relié à au moins un réseau local (8).

8. Commutateur à autonomie d'acheminement (31, 33)
comprenant plusieurs ports émetteurs (51, 53, 55, 57) et plusieurs ports récepteurs (50, 52, 54, 56),
chaque port émetteur étant destiné à être connecté à un équipement terminal de traitement de données (10, 28, 29) récepteur ou à un port récepteur d'un autre commutateur à autonomie d'acheminement (32, 34),
chaque port récepteur étant destiné à être connecté à un équipement terminal de traitement de données (10, 28, 29) émetteur ou à un port émetteur d'un autre commutateur à autonomie d'acheminement (32, 34),
une pile de réception (102) adressable dans un espace d'adressage logique unique affectée à chaque port récepteur,
une pile d'émission (109) pour contenir des blocs de données adressés dans ledit espace d'adressage logique affectée à chaque port émetteur,
**caractérisé en ce que**
les ports émetteurs et les ports récepteurs du commutateur à autonomie d'acheminement sont regroupés dans un ou plusieurs circuits intégrés (38, 39, 40) à haute densité
comprenant chacun une mémoire à accès très rapide (44) physiquement accédée en lecture par les dits ports émetteurs et en écriture par les dits ports récepteurs regroupés dans le même circuit intégré,
connectés à une mémoire à accès rapide (42) dans ledit commutateur au moyen d'un bus local (43) de façon à pouvoir échanger des blocs de données entre mémoires à accès très rapide (44) et mémoire à accès rapide (42) au moyen d'un protocole antémémoire de premier niveau.

9. Commutateur à autonomie d'acheminement (31) selon la revendication 8, **caractérisé en ce qu'**il comprend un circuit à haute densité d'intégration (37) comprenant un microprocesseur (41) et une mémoire statique (44) en communication avec les mémoires (44) des circuits (38, 39, 40) et avec la mémoire (42) au moyen du protocole de cohérence antémémoire de premier niveau sur le bus local (43).

10. Commutateur à autonomie d'acheminement (31) selon l'une des revendications 8 à 9, **caractérisé en ce que** l'espace d'adressage logique est commun au dit commutateur et à au moins un processeur de commande (71) ou un autre commutateur similaire (33).

11. Commutateur à autonomie d'acheminement (31) selon l'une des revendications 8 à 10, **caractérisé en ce que** ladite mémoire à accès rapide (42) est connectée à une mémoire dynamique (35) au moyen d'un bus externe (36) de façon à pouvoir échanger des blocs de données entre la mémoire a accès rapide (42) et la mémoire dynamique (35) au moyen d'un protocole antémémoire de deuxième niveau.

12. Commutateur à autonomie d'acheminement (31) selon l'une des revendications 8 à 11, **caractérisé en ce que** ladite mémoire à accès rapide (42) est connectée à une ou plusieurs mémoires à accès rapide (42) d'autres commutateurs identiques au moyen du bus externe de façon à pouvoir échanger des blocs de données entre les mémoires à accès rapide (42) au moyen du protocole antémémoire de deuxième niveau.

13. Commutateur à autonomie d'acheminement (31) selon l'une des revendications 8 à 12, **caractérisé en ce que** les ports récepteurs correspondants et les ports émetteurs correspondants sont agencés pour recevoir et émettre respectivement des cellules formatées de manière à contenir chacune un nombre constant de multiplets.

14. Commutateur à autonomie d'acheminement (31) selon l'une des revendications 8 à 13, **caractérisé en ce qu'**il est relié à au moins un réseau local (8).

15. Système de transmission de données, **caractérisé en ce qu'**il comprend deux ensembles constitués chacun d'au moins un commutateur selon la revendication 1,
les ports récepteurs du commutateur (31) du premier ensemble et les ports émetteurs du commutateur (32) du deuxième ensemble étant connectés ou destinés à être connectés à des équipements de traitement de données du système de transmission de données,
les ports émetteurs du commutateur (31) du premier ensemble étant connectés ou destinés à être connectés aux ports récepteurs du commutateur (32) du deuxième ensemble.

16. Système de transmission de données selon la revendication 15,
**caractérisé en ce qu'**il comprend deux ensembles constitués chacun d'un même nombre pair de commutateurs (31, 33 et 32, 34),
les ports récepteurs des commutateurs du premier ensemble (31, 33) et les ports émetteurs des commutateurs du deuxième ensemble (32, 34) étant connectés ou destinés à être connectés à des équipements de traitement de données du système de transmission de données,
les ports émetteurs des commutateurs du premier ensemble (31, 33) étant connectés ou destinés à être connectés aux ports récepteurs des commutateurs du deuxième ensemble (32, 34).

17. Système de transmission de données selon l'une des revendications 15 à 16, **caractérisé en ce qu'**il comprend un protocole antémémoire et
**en ce que** les commutateurs constituant les dits deux ensembles (31, 33 et 32, 34) sont connectés à une mémoire dynamique (35) au moyen d'un bus externe (36) de façon à commander des échanges de blocs de données au moyen d'un protocole antémémoire.

18. Système de transmission de données selon l'une des revendications 15 à 17, **caractérisé en ce que** les commutateurs sont disposés en papillon (31, 33,32,34).

19. Système de transmission de données selon l'une des revendications 15 à 18, **caractérisé en ce** le système de transmission de données est agencé pour former un système de vidéoconférence.

20. Système de transmission de données, **caractérisé en ce qu'**il comprend deux ensembles constitués chacun d'au moins un commutateur selon la revendication 8,
les ports récepteurs du commutateur (31) du premier ensemble et les ports émetteurs du commutateur (32) du deuxième ensemble étant connectés ou destinés à être connectés à des équipements de traitement de données du système de transmission de données,
les ports émetteurs du commutateur (31) du premier ensemble étant connectés ou destinés à être connectés aux ports récepteurs du commutateur (32) du deuxième ensemble.

21. Système de transmission de données selon la revendication 20,
**caractérisé en ce qu'**il comprend deux ensembles constitués chacun d'un même nombre pair de commutateurs,
les ports récepteurs des commutateurs du premier ensemble et les ports émetteurs des commutateurs du deuxième ensemble étant connectés ou destinés à être connectés à des équipements de traitement de données du système de transmission de données,
les ports émetteurs des commutateurs du premier ensemble étant connectés ou destinés à être connectés aux ports récepteurs des commutateurs du deuxième ensemble.

22. Système de transmission de données selon l'une des revendications 20 à 21, **caractérisé en ce qu'**il comprend un protocole antémémoire et
**en ce que** les commutateurs constituant les dits deux ensembles (31, 33 et 32, 34) sont connectés à une mémoire dynamique (35) au moyen d'un bus externe (36) de façon à commander des échanges de blocs de données au moyen d'un protocole antémémoire.

23. Système de transmission de données selon l'une des revendications 20 à 22, **caractérisé en ce que** les commutateurs sont disposés en papillon (31, 33, 32, 34).

24. Système de transmission de données selon l'une des revendications 20 à 23, **caractérisé en ce que** le système de transmission de données est agencé pour former un système de vidéoconférence.

## Claims

1. Self-routing switch (31, 33)
comprising several transmitting ports (51, 53, 55, 57) and several receiving ports (50, 52, 54, 56),
each transmitting port being intended to be connected to receiving data-processing terminal equipment (10, 28, 29) or to a receiving port of another self-routing switch (32, 34),
each receiving port being intended to be connected to transmitting data-processing terminal equipment (10, 28, 29) or to a transmitting port of another self-routing switch (32, 34),
a reception stack (102) addressable in a single logical addressing space assigned to each receiving port,
a transmission stack (103) for containing addresses of said single logical addressing space assigned to each receiving port,
**characterised in that**
the transmitting ports and the receiving ports of the self-routing switch are grouped together in one or more high-density integrated circuits (38, 39, 40)
each comprising a very quick-access memory (44) physically accessed in read mode by said transmitting ports and in write mode by said receiving ports grouped together in the same integrated circuit,
connected to a quick-access memory (42) in said switch by means of a local bus (43) so as to be able to exchange data blocks between very quick-access memories (44) and quick-access memory (42) by means of a first-level cache protocol.

2. Self-routing switch (31) according to Claim 1 **characterised in that** it comprises a high integration density circuit (37) comprising a microprocessor (41) and a static memory (44) in communication with the memories (44) of the circuits (38, 39, 40) and with the memory (42) by means of the first-level cache consistency protocol over the local bus (43).

3. Self-routing switch (31) according to one of Claims 1 to 2 **characterised in that** the logical addressing space is common to said switch and at least one command processor (71) or another similar switch (33).

4. Self-routing switch (31) according to one of Claims 1 to 3, **characterised in that** said quick-access memory (42) is connected to a dynamic memory (35) by means of an external bus (36) so as to be able to exchange data blocks between the quick-access memory (42) and the dynamic memory (35) by means of a second-level cache protocol.

5. Self-routing switch (31) according to one of Claims 1 to 4, **characterised in that** said quick-access memory (42) is connected to one or more quick-access memories (42) of other identical switches by means of the external bus so as to be able to exchange data blocks between the quick-access memories (42) by means of the second-level cache protocol.

6. Self-routing switch (31) according to one of Claims 1 to 5, **characterised in that** the corresponding receiving ports and the corresponding transmitting ports are arranged so as to receive and transmit respectively cells formatted so as each to contain a constant number of bytes.

7. Self-routing switch (31) according to one of Claims 1 to 6, **characterised in that** it is connected to at least one local area network (8).

8. Self-routing switch (31, 33)
comprising several transmitting ports (51, 53, 55, 57) and several receiving ports (50, 52, 54, 56),
each transmitting port being intended to be connected to receiving data-processing terminal equipment (10, 28, 29) or to a receiving port of another self-routing switch (32, 34),
each receiving port being intended to be connected to transmitting data-processing terminal equipment (10, 28, 29) or to a transmitting port of another self-routing switch (32, 34),
a reception stack (102) addressable in a single logical addressing space assigned to each receiving port,
a transmission stack (109) for containing data blocks addressed to said logical addressing space assigned to each receiving port,
**characterised in that**
the transmitting ports and the receiving ports of the self-routing switch are grouped together in one or more high-density integrated circuits (38, 39, 40)
each comprising a very quick-access memory (44) physically accessed in read mode by said transmitting ports and in write mode by said receiving ports grouped together in the same integrated circuit,
connected to a quick-access memory (42) in said switch by means of a local bus (43) so as to be able to exchange data blocks between very quick-access memories (44) and quick-access memory (42) by means of a first-level cache protocol.

9. Self-routing switch (31) according to Claim 8 **characterised in that** it comprises a high integration density circuit (37) comprising a microprocessor (41) and a static memory (44) in communication with the memories (44) of the circuits (38, 39, 40) and with the memory (42) by means of the first-level cache consistency protocol over the local bus (43).

10. Self-routing switch (31) according to one of Claims 8 to 9 **characterised in that** the logical addressing space is common to said switch and at least one command processor (71) or another similar switch (33).

11. Self-routing switch (31) according to one of Claims 8 to 10, **characterised in that** said quick-access memory (42) is connected to a dynamic memory (35) by means of an external bus (36) so as to be able to exchange data blocks between the quick-access memory (42) and the dynamic memory (35) by means of a second-level cache protocol.

12. Self-routing switch (31) according to one of Claims 8 to 11, **characterised in that** said quick-access memory (42) is connected to one or more quick-access memories (42) of other identical switches by means of the external bus so as to be able to exchange data blocks between the quick-access memories (42) by means of the second-level cache protocol.

13. Self-routing switch (31) according to one of Claims 8 to 12, **characterised in that** the corresponding receiving ports and the corresponding transmitting ports are arranged so as to receive and transmit respectively cells formatted so as each to contain a constant number of bytes.

14. Self-routing switch (31) according to one of Claims 8 to 13, **characterised in that** it is connected to at least one local area network (8).

15. Data transmission system, **characterised in that** it comprises two assemblies each constituted by at least one switch according to Claim 1,
the receiving ports of the switch (31) of the first assembly and transmitting ports of the switch (32) of the second assembly being connected or intended to be connected to data-processing equipment of the data transmission system,
the transmitting ports of the switch (31) of the first assembly being connected or intended to be connected to the receiving ports of the switch (32) of the second assembly.

16. Data transmission system according to Claim 15,
**characterised in that** it comprises two assemblies each constituted by the same even number of switches (31, 33 and 32, 34),
the receiving ports of the switches of the first assembly (31, 33) and the transmitting ports of the switches of the second assembly (32, 34) being connected or intended to be connected to data-processing equipment of the data transmission system,
the transmitting ports of the switches of the first assembly (31, 33) being connected or intended to be connected to the receiving ports of the switches of the second assembly (32, 34).

17. Data-transmission system according to one of Claims 15 to 16, **characterised in that** it comprises a cache protocol and
**in that** the switches constituting said two assemblies (31, 33 and 32, 34) are connected to a dynamic memory (35) by means of an external bus (36) so as to control exchanges of data blocks by means of a cache protocol.

18. Data transmission system according to one of Claims 15 to 17, **characterised in that** the switches are arranged in butterfly format (31, 33, 32, 34).

19. Data transmission system according to one of Claims 15 to 18, **characterised in that** the data transmission system is arranged so as to form a videoconferencing system.

20. Data transmission system, **characterised in that** it comprises two assemblies each constituted by at least one switch according to Claim 8,
the receiving ports of the switch (31) of the first assembly and the transmitting ports of the switch (32) of the second assembly being connected or intended to be connected to data-processing equipment of the data transmission system,
the transmitting ports of the switch (31) of the first assembly being connected or intended to be connected to the receiving ports of the switch (32) of the second assembly.

21. Data transmission system according to Claim 20,
**characterised in that** it comprises two assemblies each constituted by the same even number of switches,
the receiving ports of the switches of the first assembly and the transmitting ports of the switches of the second assembly being connected or intended to be connected to data-processing equipment of the data transmission system,
the transmitting ports of the switches of the first assembly being connected or intended to be connected to the receiving ports of the switches of the second assembly.

22. Data transmission system according to one of Claims 20 to 21, **characterised in that** it comprises a cache protocol and
**in that** the switches constituting said two assemblies (31, 33 and 32, 34) are connected to a dynamic memory (35) by means of an external bus (36) in order to control exchanges of data blocks by means of a cache protocol.

23. Data transmission system according to one of Claims 20 to 22, **characterised in that** the switches are arranged in butterfly format (31, 33, 32, 34).

24. Data transmission system according to one of Claims 20 to 23, **characterised in that** the data transmission system is arranged so as to form a videoconferencing system.

## Patentansprüche

1. Vermittlungsstelle (31, 33) mit Leitwegautonomie,
mit mehreren Senderanschlüssen (51, 53, 55, 57) und mehreren Empfängeranschlüssen (50, 52, 54, 56),
wobei jeder Senderanschluss dazu bestimmt ist, an einen Datenverarbeitungsendgerät-Empfänger (10, 28, 29) oder an einen Empfängeranschluss einer weiteren Vermittlungsstelle (32, 34) mit Leitwegautonomie angeschlossen zu werden,
wobei jeder Empfängeranschluss dazu bestimmt ist, an den Sender eines Datenverarbeitungsendgeräts (10, 28, 29) oder an einen Senderanschluss einer weiteren Vermittlungsstelle (32, 34) mit Leitwegautonomie angeschlossen zu werden,
einem Empfangsstapel (102), der in einem einzigen logischen Adressierungsraum, der jedem Empfängeranschluss zugewiesen ist, adressierbar ist,
einem Sendestapel (103), der die Adressen des einzigen logischen Adressierungsraums, der jedem Senderanschluss zugewiesen ist, enthält,
**dadurch gekennzeichnet, dass**
die Senderanschlüsse und die Empfängeranschlüsse der Vermittlungsstelle mit Leitwegautonomie in einer oder in mehreren integrierten Schaltungen (38, 39, 40) mit hoher Dichte angeordnet sind
und jeweils einen Speicher mit sehr schnellem Zugriff (44) umfassen, auf den zum Lesen durch die Senderanschlüsse und zum Schreiben durch die Empfängeranschlüsse, die in derselben integrierten Schaltung angeordnet sind, physikalisch zugegriffen wird,
und über einen lokalen Bus (43) mit einem Speicher (42) mit schnellem Zugriff in der Vermittlungsstelle verbunden sind, um Datenblöcke zwischen Speichern (44) mit sehr schnellem Zugriff und dem Speicher (42) mit schnellem Zugriff mittels eines Cacheprotokolls der ersten Ebene austauschen zu können.

2. Vermittlungsstelle (31) mit Leitwegautonomie nach Anspruch 1, **dadurch gekennzeichnet, dass** sie eine Schaltung (37) mit hoher Integrationsdichte umfasst, die einen Mikroprozessor (41) und einen statischen Speicher (44), die mit den Speichern (44) der Schaltungen (38, 39, 40) und mit dem Speicher (42) mittels des Cachespeicher-Kohärenzprotokolls der ersten Ebene auf dem lokalen Bus (43) kommunizieren, enthält.

3. Vermittlungsstelle (31) mit Leitwegautonomie nach einem der Ansprüche 1 bis 2, **dadurch gekennzeichnet, dass** der logische Adressierungsraum der Vermittlungsstelle und wenigstens einem Steuerprozessor (71) oder einer weiteren ähnlichen Vermittlungsstelle (33) gemeinsam ist.

4. Vermittlungsstelle (31) mit Leitwegautonomie nach einem der Ansprüche 1 bis 3, **dadurch gekennzeichnet, dass** der Speicher (42) mit schnellem Zugriff mit einem dynamischen Speicher (35) mittels eines externen Busses (36) so verbunden ist, dass zwischen dem Speicher (42) mit schnellem Zugriff und dem dynamischen Speicher (35) mittels eines Cachespeicher-Protokolls der ersten Ebene Datenblöcke ausgetauscht werden können.

5. Vermittlungsstelle (31) mit Leitwegautonomie nach einem der Ansprüche 1 bis 4, **dadurch gekennzeichnet, dass** der Speicher (42) mit schnellem Zugriff mit einem oder mehreren Speichern (42) mit schnellem Zugriff anderer, völlig gleicher Vermittlungsstellen mittels eines externen Busses so verbunden ist, dass zwischen den Speichern (42) mit schnellem Zugriff mittels des Cachespeicher-Protokolls der ersten Ebene Datenblöcke ausgetauscht werden können.

6. Vermittlungsstelle (31) mit Leitwegautonomie nach einem der Ansprüche 1 bis 5, **dadurch gekennzeichnet, dass** die entsprechenden Empfängeranschlüsse und die entsprechenden Senderanschlüsse so angeordnet sind, dass sie formatierte Zellen in der Weise empfangen bzw. senden können, dass jede eine konstante Anzahl Bytes enthält.

7. Vermittlungsstelle (31) mit Leitwegautonomie nach einem der Ansprüche 1 bis 6, **dadurch gekennzeichnet, dass** sie mit wenigstens einem lokalen Netz (8) verbunden ist.

8. Vermittlungsstelle (31, 33) mit Leitwegautonomie,
mit mehreren Senderanschlüssen (51, 53, 55, 57) und mehreren Empfängeranschlüssen (50, 52, 54, 56),
wobei jeder Senderanschluss dazu bestimmt ist, mit einem Empfänger-Datenverarbeitungsendgerät (10, 28, 29) oder mit einem Empfängeranschluss einer weiteren Vermittlungsstelle (32, 34) mit Leitwegautonomie verbunden zu werden,
wobei jeder Empfängeranschluss dazu bestimmt ist, mit einem Sender-Datenverarbeitungsendgerät (10, 28, 29) oder mit einem Senderanschluss einer weiteren Vermittlungsstelle (32, 34) mit Leitwegautonomie verbunden zu werden,
einem Empfangsstapel (102), der in einem einzigen logischen Adressenraum, der jedem Empfängeranschluss zugewiesen ist, adressierbar ist,
einem Sendestapel (109), der Datenblöcke enthält, die in diesem logischen Adressenraum, der jedem Senderanschluss zugewiesen ist, adressiert werden,
**dadurch gekennzeichnet, dass**
die Senderanschlüsse und die Empfängeranschlüsse der Vermittlungsstelle mit Leitwegautonomie in einer oder mehreren integrierten Schaltungen (38, 39, 40) hoher Dichte angeordnet sind
und jeweils einen Speicher (44) mit sehr schnellem Zugriff, auf den zum Lesen durch die Senderanschlüsse und zum Schreiben durch die Empfängeranschlüsse, die in derselben integrierten Schaltung angeordnet sind, physikalisch zugegriffen wird,
und mit einem Speicher (42) mit schnellem Zugriff in der Vermittlungsstelle über einen lokalen Bus (43) in der Weise verbunden sind, dass zwischen den Speichern (44) mit sehr schnellem Zugriff und dem Speicher (42) mit schnellem Zugriff mittels eines Cachespeicher-Protokolls der ersten Ebene Datenblöcke ausgetauscht werden können.

9. Vermittlungsstelle (31) mit Leitwegautonomie nach Anspruch 8, **dadurch gekennzeichnet, dass** sie eine Schaltung (37) mit hoher Integrationsdichte umfasst, die einen Mikroprozessor (41) und einen statischen Speicher (44), die mit den Speichern (44) der Schaltungen (38, 39, 40) und mit dem Speicher (42) mittels eines Cachespeicher-Kohärenzprotokolls der ersten Ebene über den lokalen Bus (43) kommunizieren, umfasst.

10. Vermittlungsstelle (31) mit Leitwegautonomie nach einem der Ansprüche 8 bis 9, **dadurch gekennzeichnet, dass** der logische Adressierungsraum der Vermittlungsstelle und wenigstens einem Steuerprozessor (71) oder einer weiteren, ähnlichen Vermittlungsstelle (31) gemeinsam ist.

11. Vermittlungsstelle (31) mit Leitwegautonomie nach einem der Ansprüche 8 bis 10, **dadurch gekennzeichnet, dass** der Speicher (42) mit schnellem Zugriff mit einem dynamischen Speicher (35) mittels eines externen Busses (36) in der Weise verbunden ist, dass zwischen dem Speicher (42) mit schnellem Zugriff und dem dynamischen Speicher (35) mittels eines Cachespeicher-Protokolls der ersten Ebene Datenblöcke ausgetauscht werden können.

12. Vermittlungsstelle (31) mit Leitwegautonomie nach einem der Ansprüche 8 bis 11, **dadurch gekennzeichnet, dass** der Speicher (42) mit schnellem Zugriff mit einem oder mit mehreren Speichern (42) mit schnellem Zugriff anderer, völlig gleicher Vermittlungsstellen mittels des externen Busses in der Weise verbunden ist, dass zwischen den Speichern (42) mit schnellem Zugriff mittels des Cachespeicher-Protokolls der ersten Ebene Datenblöcke ausgetauscht werden können.

13. Vermittlungsstelle (31) mit Leitwegautonomie nach einem der Ansprüche 8 bis 12, **dadurch gekennzeichnet, dass** die entsprechenden Empfängeranschlüsse und die entsprechenden Senderanschlüsse so angeordnet sind, dass sie formatierte Zellen in der Weise empfangen bzw. senden können, dass jede eine konstante Anzahl von Bytes enthält.

14. Vermittlungsstelle (31) mit Leitwegautonomie nach einem der Ansprüche 8 bis 13, **dadurch gekennzeichnet, dass** sie mit wenigstens einem lokalen Netz (8) verbunden ist.

15. Datenübertragungssystem, **dadurch gekennzeichnet, dass** es zwei Gesamtheiten umfasst, die jeweils aus wenigstens einer Vermittlungsstelle nach Anspruch 1 gebildet sind,
wobei die Empfängeranschlüsse der Vermittlungsstelle (31) der ersten Gesamtheit und die Senderanschlüsse der Vermittlungsstelle (32) der zweiten Gesamtheit mit Datenverarbeitungsgeräten des Datenverarbeitungssystems verbunden sind oder dazu bestimmt sind, mit diesen verbunden zu werden,
wobei die Senderanschlüsse der Vermittlungsstelle (31) der ersten Gesamtheit mit den Empfängeranschlüssen der Vermittlungsstelle (32) der zweiten Gesamtheit verbunden sind oder dazu bestimmt sind, mit ihnen verbunden zu werden.

16. Datenübertragungssystem nach Anspruch 15,
**dadurch gekennzeichnet, dass** es zwei Gesamtheiten umfasst, die jeweils aus derselben geraden Anzahl von Vermittlungsstellen (31, 33 und 32, 34) gebildet sind,
wobei die Empfängeranschlüsse der Vermittlungsstellen der ersten Gesamtheit (31, 33) und die Senderanschlüsse der Vermittlungsstellen der zweiten Gesamtheit (32, 34) mit Datenverarbeitungsgeräten des Datenübertragungssystems verbunden sind oder dazu bestimmt sind, mit diesen verbunden zu werden,
wobei die Senderanschlüsse der Vermittlungsstellen der ersten Gesamtheit (31, 33) mit den Empfängeranschlüssen der Vermittlungsstellen der zweiten Gesamtheit (32, 34) verbunden sind oder dazu bestimmt sind, mit diesen verbunden zu werden.

17. Datenübertragungssystem nach einem der Ansprüche 15 bis 16, **dadurch gekennzeichnet, dass** es ein Cachespeicher-Protokoll umfasst und
dass die Vermittlungsstellen, die die zwei Gesamtheiten (31, 33 und 32, 34) bilden, mit einem dynamischen Speicher (35) mittels eines externen Busses (36) in der Weise verbunden sind, dass der Austausch der Datenblöcke mittels eines Cachespeicher-Protokolls gesteuert wird.

18. Datenübertragungssystem nach einem der Ansprüche 15 bis 17, **dadurch gekennzeichnet, dass** die Vermittlungsstellen (31, 33, 32, 34) schmetterlingsartig angeordnet sind.

19. Datenübertragungssystem nach einem der Ansprüche 15 bis 18, **dadurch gekennzeichnet, dass** das Datenübertragungssystem so beschaffen ist, dass ein Videokonferenzsystem gebildet wird.

20. Datenübertragungssystem, **dadurch gekennzeichnet, dass** es zwei Gesamtheiten umfasst, die jeweils aus wenigstens einer Vermittlungsstelle nach Anspruch 8 gebildet sind,
wobei die Empfängeranschlüsse der Vermittlungsstelle (31) der ersten Gesamtheit und die Senderanschlüsse der Vermittlungsstelle (32) der zweiten Gesamtheit mit Datenverarbeitungsgeräten des Datenübertragungssystems verbunden sind oder dazu bestimmt sind, mit diesen verbunden zu werden,
wobei die Senderanschlüsse der Vermittlungsstelle (31) der ersten Gesamtheit mit den Empfängeranschlüssen der Vermittlungsstelle (32) der zweiten Gesamtheit verbunden sind oder dazu bestimmt sind, mit diesen verbunden zu werden.

21. Datenübertragungssystem nach Anspruch 20,
**dadurch gekennzeichnet, dass** es zwei Gesamtheiten umfasst, die jeweils aus der gleichen geraden Anzahl von Vermittlungsstellen gebildet sind,
wobei die Empfängeranschlüsse der Vermittlungsstellen der ersten Gesamtheit und die Senderanschlüsse der Vermittlungsstellen der zweiten Gesamtheit mit Datenverarbeitungsgeräten des Datenübertragungssystems verbunden sind oder dazu bestimmt sind, mit diesen verbunden zu werden,
wobei die Senderanschlüsse der Vermittlungsstellen der ersten Gesamtheit mit den Empfängeranschlüssen der Vermittlungsstellen der zweiten Gesamtheit verbunden sind oder dazu bestimmt sind, mit diesen verbunden zu werden.

22. Datenübertragungssystem nach einem der Ansprüche 20 bis 21, **dadurch gekennzeichnet, dass** es ein Cachespeicher-Protokoll umfasst und
dass die Vermittlungsstellen, die die zwei Gesamtheiten (31, 33 und 32, 34) bilden, mit einem dynamischen Speicher (35) mittels eines externen Busses (36) in der Weise verbunden sind, dass der Austausch von Datenblöcken mittels eines Cachespeicher-Protokolls gesteuert wird.

23. Datenübertragungssystem nach einem der Ansprüche 20 bis 22, **dadurch gekennzeichnet, dass** die Vermittlungsstellen schmetterlingsartig (31, 33, 32, 34) angeordnet sind.

24. Datenübertragungssystem nach einem der Ansprüche 20 bis 23, **dadurch gekennzeichnet, dass** das Datenübertragungssystem so beschaffen ist, dass ein Videokonferenzsystem gebildet wird.
